# EUROPÄISCHE PATENTANMELDUNG

(11) **EP 0 580 011 A2**
(43) Veröffentlichungstag der Anmeldung: **26.01.1994**
(21) Anmeldenummer: 93110779.1
(22) Anmeldetag: 06.07.1993
(51) Int. Cl.: H04N 7/137, H04N 7/22, H04J 3/16, H04Q 11/04, H04N 7/00

(54) **Verfahren zur Übertragung von digitalisierten Video- und Tonsignalen und eine geeignete Empfangseinrichtung**

(30) Priorität: 23.07.1992 DE 4224387
(71) Anmelder: SIEMENS AKTIENGESELLSCHAFT, D-80333 München (DE)
(72) Erfinder: Stein, Karl-Ulrich,. Dr., D-82008 Unterhaching (DE); Möhrmann, Karl-Heinz, D-81369 München (DE)

(57) **Zusammenfassung**

Das Videosignal (VS) wird nach einer Datenreduktion mit dem Tonsignal (DTS) zu einem Programmsignal (PS) zusammengefaßt und in ATM-Zellen eingefügt nach Umsetzung in ein optisches Signal über Lichtwellenleiter direkt oder über eine ATM-Vermittlung (ATM-V) zum Teilnehmer (TL) übertragen.

## Beschreibung

Die Erfindung betrifft ein Verfahren zur Übertragung von digitalisierten Video- und Tonsignalen über Lichtwellenleiter und eine geeignete Empfangseinrichtung.

In der Funkschau "8/92 Spezial" sind auf den Seiten 18 bis 21 Möglichkeiten der digitalen terrestrischen Fernsehübertragung über Rundstrahlsender beschrieben. Durch Datenreduktion und ein geeignetes Modulationsverfahren lassen sich auch HDTV-Signale bei dem üblichen Kanalabstand von 8 MHz übertragen.

Der Nachteil dieser Verfahren ist der erhebliche Aufwand, der besonders für eine komplexe Mehrstufenübertragung (Amplituden- und Phasenmodulation) erforderlich ist. Dies gilt besonders für die Übertragung von HDTV-Programmen im digitalen Signalformat mit einer Datenrate bis zu 30 Mbit/s. Da außerdem - zumindest für eine Übergangszeit - auch noch Programme mit herkömmlicher Modulation übertragen werden müssen, führt dies zu einer erheblichen Begrenzung der Programmanzahl.

Es sind außerdem Vorschläge bekannt, über eigens hierfür vorgesehene Netzstrukturen digitalisierte Videosignale über Lichtwellenleiter zu übertragen.

Es soll ein Verfahren zur Übertragung von digitalisierten Videosignalen angegeben werden, das die Normen des Breitband-ISDN (Integrated Services Digital Network) verwendet und das außer dem Verteilfernsehen auch weitere Dienste wie Pay-TV und interaktive Dienste ermöglicht.

Ein geeignetes Verfahren ist im Patentanspruch 1 angegeben.

Vorteilhaft ist die Verwendung von ATM-Zellen (Asynchronous Transfer Mode-Datenblöcke) zur Übertragung der Information. Hierdurch ist eine volle Kompatibilität mit dem Übertragungsverfahren des Breitband-ISDN durch einheitliche Schnittstellen ohne Signalkonversion gegeben. Durch die Datenreduktion ist eine wirtschaftliche Übertragung von Fernsehprogrammen einschließlich des Tonsignals und eventueller Zusatzsignale möglich.

Im Bedarfsfall kann eine Sicherung gegen Übertragungsfehler durch einen fehlerkorrigierenden Code erfolgen.

Mehrere Video- und Tonsignale beinhaltende Programmsignale werden zu einem Multiplex-Programmsignal zusammengefaßt und über Lichtwellenleiter übertragen. Die Übertragung kann mit Hilfe eines optischen Verteilnetzes direkt zu den Empfängern erfolgen, ebenso können die Signale über eine ATM-Vermittlung geführt werden, wodurch eine höhere Flexibilität bei der Programmauswahl möglich ist.

Auf der Empfangsseite ist die direkte Auswahl eines digitalen Programmsignals aus dem Multiplex-Programmsignal möglich, der die anschließende Umsetzung in ein analoges Fernsehsignal folgt.

Die Integration der Empfangskopfstelle und des Rundstrahlempfangsteils in einen Fernsehempfänger, welcher dann Eingangsschnittstellen sowohl für analoge Videosignale als auch für digitale Vielstufensignale und auch für ATM-Multiplexsignale aufweist, erscheint besonders vorteilhaft. Zweckmäßigerweise sollte dieselbe Programmcodierung für alle Übertragungswege gewählt werden. Hierbei ist eine automatische Auswahl des qualitativ besten Übertragungsweges zweckmäßig.

Der Bedienteil des Empfängers kann zur Programmwahl sowohl auf den Tuner für analoge Signale als auch über interne Umschalter auf den ATM-Demultiplexer oder den RundstrahlEmpfangsteil für digitalisierte Programmsignale zugreifen und bietet auch die Möglichkeit des interaktiven Zugriffs zur Auswahl eines Programmsignals in einer Verteilstelle oder Videodatenbank.

Weitere vorteilhafte Ausbildungen des Verfahrens sind in den Unteransprüchen angegeben.

Das Verfahren wird anhand von Figuren näher erläutert.

Es zeigen:
- Fig. 1: eine sendeseitige Kopfstelle für digitale Programmverteilung über Lichtwellenleiter,
- Fig. 2: Möglichkeiten des Übertragungsnetzes und
- Fig. 3: eine Empfangseinrichtung für LWL- und Rundstrahlübertragung.

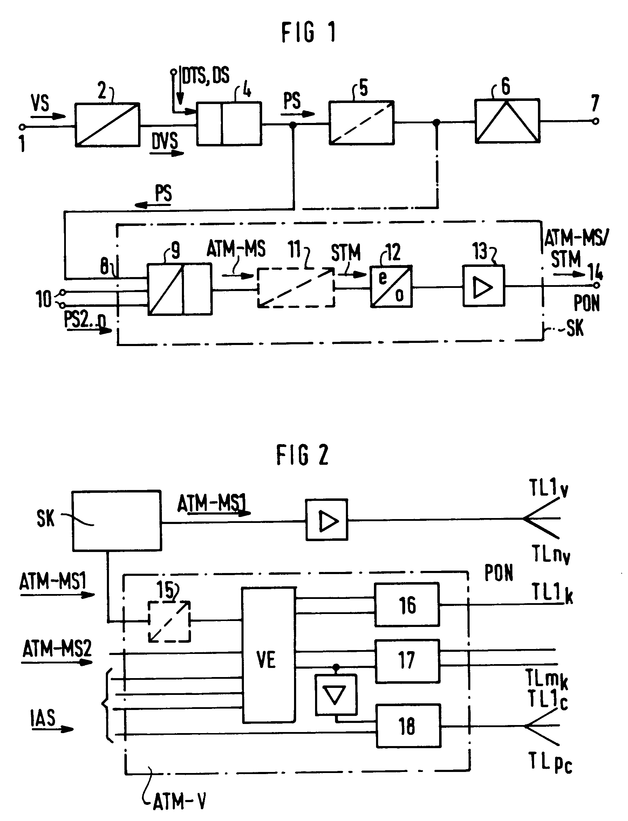

In Figur 1 sind Ausführungsbeispiele der Sendeeinrichtungen für die digitale Fernsehübertragung dargestellt. Sie bestehen aus der Reihenschaltung eines Quellencodierers 2, eines Multiplexers 4, eines ATM-Converter/Multiplexers 9, gegebenenfalls eines Format-Converters 11, eines elektro-optischen Wandlers 12 sowie eines optischen Verstärkers 13. Für eine Rundstrahlaussendung ist an den Ausgang des Multiplexers 4 ein Codierer 5 mit nachgeschaltetem Modulator 6 zur digitalen Modulation vorgesehen. Der ATM-Converter/Multiplexer 9, gegebenenfalls der Format-Converter 11, der E/O-Wandler 12 und der optische Verstärker 13 bilden eine Sendekopfstelle SK.

Mit der Sendeeinrichtung sollen sowohl herkömmliche Videosignale als auch HDTV-Signale übertragen werden. Das am Signaleingang 1 anliegende Videosignal VS wird zunächst abgetastet und digitalisiert. Durch den Quellencodierer 2 erfolgt eine Datenreduktion auf ca. 8 Mbit/s bei herkömmlichen Videosignalen und auf ca. 24...30 Mbit/s bei HDTV-Signalen. Durch verbesserte Quellencodierer kann die Datenrate noch weiter gesenkt werden. Zu dem datenreduzierten Videosignal DVS werden das zugehörige digitalisierte Tonsignal DTS und gegebenenfalls weitere Datensignale DS (beispielsweise Videotext) im Multiplexer 4 zu einem Programmsignal PS Zusammengefaßt.

Das Tonsignal kann natürlich ebenfalls datenreduziert werden. In dem Codierer 5 wird das Programmsignal PS durch einen fehlerkorrigierenden Code gegen Übertragungsfehler geschützt. Dies ist bei Rundstrahlübertragung unbedingt erforderlich, da hier eine gegen Störungen anfällige gemischte Phasen- und Amplitudenmodulation angewendet wird, die beispielsweise 16 verschiedene Werte, die jeweils einer 4-bit-Kombination entsprechen, aufweist. Das modulierte Programmsignal wird über den Programmsignalausgang 7 der Sendeeinrichtung zugeführt.

Zur Übertragung über Lichtwellenleiter wird das Programmsignal PS dem Programmsignaleingang 8 des ATM-Converter/Multiplexers 9 zugeführt. Gegebenenfalls kann auch das gesicherte Programmsignal nach dem Codierer 5 verwendet werden oder eine gesondert durchgeführte Fehlersicherung mit geringerer Redundanz erfolgen. Der ATM-Converter/Multiplexer fügt das Multiplex-Programmsignal in sogenannte ATM-Zellen ein, die jeweils insgesamt 53 Bytes umfassen, von denen 5 Bytes für den Kopfteil (Header) und 48 Bytes zur Übertragung von Information zur Verfügung stehen. Die Struktur der ATM-Zellen ist in der Zeitschrift "Der Fernmelde-Ingenieur" April/Mai 1991, Seiten 43 bis 45 beschrieben.

Nach der Einfügung des Programmsignals PS in ATM-Zellen werden diese mit ATM-Zellen anderer an weiteren Programmsignaleingängen 10 anliegende Programmsignale PS2 bis PSn zu einem ATM-Multiplexsignal ATM-MS zusammengefaßt, das entweder direkt oder nach der Umsetzung in dem Formatkonverter 11 nach elektro-optischer Wandlung und gegebenenfalls Verstärkung im optischen Verstärker 13 über den optischen Signalausgang 14 an ein optisches Netz abgegeben wird. Der Formatkonverter 11 fügt die ATM-Zellen beispielsweise in Transportmodule der synchronen digitalen Hierarchie ein (z.B. STM-1 bis STM-16, CCITT-Recommendation G.709, Fig. 2-l/G.709). Die Sendekopfstelle SK ist also der Teil der Anordnung zur Signalaufbereitung für die Übertragung über Lichtwellenleiter.

In Figur 2 sind Beispiele für Netzstrukturen zur Verteilung der Programmsignale dargestellt. Von der Sendekopfstelle SK kann das ATM-Multiplexsignal über ein passives optisches Netz PON durch sogenannte Splitter direkt auf mehrere Lichtwellenleiter und über diese auf die Teilnehmer TL1ᵥ bis TLnᵥ verteilt werden. Die Signale können jedoch auch über eine ATM-Vermittlung ATM-V geführt werden. Gegebenenfalls ist ein weiterer Format-Converter 15 zur Rückumsetzung des zu übertragenden Multiplex-Signals in das ATM-Multiplexsignal ATM-MS oder vermittlungsbedingte Transportmodule erforderlich.

Durch die ATM-Vermittlung bzw. deren Vermittlungseinrichtung VE ist eine Kombination unterschiedlicher Programme, die innerhalb von ATM-Multiplexsignalen ATM-MS1, ATM-MS2, ... im Zeitmultiplexbetrieb übertragen werden, möglich. Es können auch Signale IAS von interaktiven Diensten mit den ATM-Multiplexsignalen in Kombinierern 16 bis 18 direkt oder über die Vermittlungseinrichtung VE zusammengefaßt werden. Diese Signale können auch über getrennte Leitungen von und zu den Teilnehmern TL1ₖ bis TLmₖ übertragen werden. Hierbei ist auch wiederum ein Aufteilen der Signale auf mehrere Teilnehmer TL1_{c} bis TLp_{c} möglich.

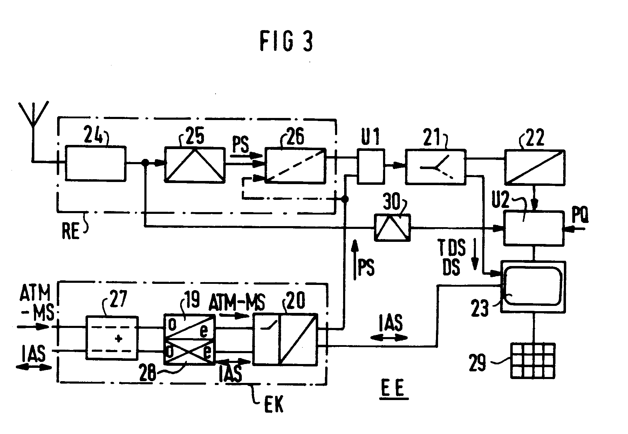

In Figur 3 ist eine Empfangseinrichtung EE für digitale Fernsehprogramme dargestellt. In einer Empfangskopfstelle EK wird das ATM-Multiplexsignal ATM-MS nach der opto-elektrischen Wandlung im O/E-Wandler 19 einem ATM-Demultiplexer/Deassembler 20 zugeführt, der - von einem Bedienteil 29 des Empfängers 23 gesteuert - eines der Programmsignale PS auswählt und aus dem ATM-Format in ein Multiplexsignal rückumsetzt, das über einen Demultiplexer 21 und einen Quellendecodierer 22 dem Empfänger 23 zugeführt wird, der die üblichen Schaltungen zur Verarbeitung des Video- und des Tonsignals enthält. Die Ton- und Datensignale TDS,DS können vom Ausgang des Demultiplexers abgezweigt und entsprechenden Einheiten des Empfängers zugeführt werden.

Im Rundstrahl-Empfangsteil RE ist ein Tuner 24 und ein Demodulator 25 für das digitalisierte Videosignal vorgesehen, dem ein Decodierer 26 zur Fehlerkorrektur nachgeschaltet ist. Der Decodierer 26 kann die Fehlerkorrektur für das vom ATM-Demultiplexer/Deassembler 20 kommende Signal mit übernehmen, falls dieselbe Kanalcodierung wie bei Rundstrahlübertragung eingesetzt wird; anderenfalls kann eine zusätzliche Fehlerkorrektureinrichtung in der Empfangskopfstelle vorgesehen werden. Ein erster Umschalter U1, der dem Demultiplexer 21 vorgeschaltet ist, ermöglicht die Auswahl der digitalisierten Signale von verschiedenen Empfangswegen. Ein zweiter Umschalter U2, der zwischen dem Quellendecodierer 22 und dem Empfänger 23 eingeschaltet ist, gestattet die Umschaltung zwischen unterschiedlichen analogen Signalen, z.B. dem analogen Signal vom Ausgang des dem Tuners 24 nachgeschalteten Demodulators 30 und dem Signal vom Ausgang des Quellendecodierers 22. Zur Steuerung ist ein Bedienteil 29 (Fernbedienung) vorgesehen, das gegebenenfalls auch für die interaktiven Dienste verwendet wird.

Die Signale IAS für interaktive Dienste werden über einen E/O-O/E-Wandler und den ATM-Demultiplexer/Deassembler 20 einem Empfänger oder einem geeigneten Endgerät zugeführt. Wird das Signal IAS in beiden Übertragungsrichtungen über denselben Lichtwellenleiter übertragen, dann ist der gestrichelt eingezeichnete Kombinierer 27 erforderlich. Bei dem in Fig. 3 dargestellten Beispiel der Empfangskopfstation EK erfolgt die Übertragung über einen zweiten Lichtwellenleiter.

Die Programmwahl sollte so erfolgen, daß durch die Betätigung einer bestimmten Programmselektionstaste dasselbe Programm über das optische Netz oder die Antenne empfangen wird.

Zur Auswahl des gewünschten Übertragungsweges sind die Umschalter U1 und U2 vorgesehen. Es wird zunächst auch noch der Empfang analoger Videosignale vorgesehen. Ebenso ist eine Umschaltung auf weitere Programmquellen PQ wie z.B. Videorecorder und Bildplatte vorgesehen. Auch ein Satelliten-Empfangsteil mit FM-Demodulator kann im Empfänger vorhanden sein.

Die Zuordnung der ATM-Zellen zu einem bestimmten Programm erfolgt durch Kennzeichnung im Kopfteil der Zellen. Dieser kann auch zusätzliche Informationen übertragen, beispielsweise ob Mono- oder Stereotonsignale übertragen werden, und empfangsseitig eine entsprechende Umschaltung veranlassen. Da häufig weitere Informationen übertragen werden sollen, können spezielle ATM-Zellen periodisch oder in unregelmäßigen Zeitabständen eingefügt werden, deren Informationsteil ganz oder teilweise der Übertragung dieser Information, beispielsweise der Name der Sendestation, Programmhinweisen oder Videotext dient.

In dem optischen Übertragungsnetz können weitere als die eingezeichneten optischen Verstärker enthalten sein. Besonders geeignet sind hier Faserverstärker. Es können auch Halbleiterverstärker mit geringer Linearität eingesetzt werden. Die Übertragung weiterer Signale kann im optischen Wellenlängenmultiplexbetrieb oder mittels weiterer Lichtwellenleiter erfolgen. Für Pay-TV-Signale wird die Übertragung der Video- oder/und Tonsignale verschlüsselt erfolgen. Den entsprechenden Schlüsselcode kann der Empfänger beispielsweise durch Magnetkarten, Chipkarten oder durch Übertragung von der Pay-TV-Station erhalten.

Durch die Kombinierbarkeit der verschiedenen Übertragungswege und Dienste ist die Empfangseinrichtung für das erweiterte Programm- und Diensteangebot bestens gerüstet.

## Patentansprüche

1. Verfahren zur Übertragung von digitalisierten Video- und Tonsignalen über Lichtwellenleiter,
**dadurch gekennzeichnet**,
daß ein Videosignal (VS) oder/und ein Tonsignal (TS) durch ein Datenreduktionsverfahren in ein digitales Videosignal (DVS) und/oder ein digitales Tonsignal (DTS) mit geringerer Datenrate umgesetzt werden,
daß aus diesen Digitalsignalen (DVS, DTS) durch Multiplexen ein Programmsignal (PS) gebildet wird,
daß das Programmsignal (PS) in ATM-Zellen eingefügt wird, daß es zusammen mit weiteren in ATM-Zellen eingefügte Programmsignalen (PS2 ...PSn) zu einem ATM-Multiplexsignal (ATM-MS) zusammengefaßt und nach einer Umsetzung in ein optisches Signal über ein optisches Netz übertragen wird und
daß empfangsseitig nach der Umsetzung in ein elektrisches Signal aus dem ATM-Multiplexsignal (ATM-MS) ein Programmsignal (PS) ausgewählt wird und einer Empfangseinrichtung (EE) zugeführt wird.

2. Verfahren nach Anspruch 1,
**dadurch gekennzeichnet**,
daß digitale Datensignale (DS) mit dem digitalen Videosignal (DVS) und dem digitalen Tonsignal (DTS) zum Programmsignal (PS) zusammengefaßt werden.

3. Verfahren nach Anspruch 1 oder 2,
**dadurch gekennzeichnet**,
daß das ATM-Multiplexsignal (ATM-MS) in ein standardisiertes Schnittstellensignal (STM-1) eingefügt wird.

4. Verfahren nach einem der vorhergehenden Ansprüche,
**dadurch gekennzeichnet**,
daß das ATM-Multiplexsignal (ATM-MS) über eine ATM-Vermittlung (ATM-V) zum Teilnehmer (TL) übertragen wird.

5. Verfahren nach einem der vorhergehenden Ansprüche,
**dadurch gekennzeichnet**,
daß im Kopfteil der ATM-Zellen Zusatzinformation über das Programmsignal (PS) übertragen wird.

6. Verfahren nach einem der vorhergehenden Ansprüche,
**dadurch gekennzeichnet**,
daß Zusatzinformation/Rundspruchdaten im Informationsteil von zusätzlich eingefügten ATM-Zellen übertragen wird.

7. Verfahren nach einem der vorhergehenden Ansprüche,
**dadurch gekennzeichnet**,
daß das ATM-Multiplexsignal (ATM-MS) mit interaktiven Signalen (IAS) im Format von ATM-Zellen zusammengefaßt zum Teilnehmer übertragen wird.

8. Verfahren nach einem der vorhergehenden Ansprüche,
**dadurch gekennzeichnet**,
daß die Kombination mit interaktiven Signalen (IAS) durch Fasermultiplex erfolgt, wobei ein zusätzlicher Lichtwellenleiter zwischen ATM-Vermittlung (ATM-V) und Teilnehmern (TL) verlegt ist.

9. Verfahren nach einem der vorhergehenden Ansprüche
**dadurch gekennzeichnet**,
daß die Datenübertragung mit ATM-Zellen über standardisierte Breitband-Schnittstellenformate (STM-1) erfolgt.

10. Verfahren nach einem der vorhergehenden Ansprüche,
**dadurch gekennzeichnet**,
daß die übertragenen Daten durch einen fehlerkorrigierenden Code geschützt werden.

11. Verfahren nach Anspruch 10,
**dadurch gekennzeichnet**,
daß dieselbe Kanalcodierung bei Rundstrahlübertragung und bei Übertragung über das optische Netz verwendet wird.

12. Verfahren nach einem der vorhergehenden Ansprüche,
**dadurch gekennzeichnet**,
daß die Programmauswahl bei der Übertragung über ein optisches Netz durch einen abgesetzten ATM-Deassembler/Demultiplexer erfolgt.

13. Empfangseinrichtung (EE) für digitalisierte Video- und Tonsignale,
**dadurch gekennzeichnet**,
daß eine Empfangskopfstelle (EK) für ein über ein LWL-Netz in ATM-Zellen übertragenes mindestens ein digitalisiertes Videosignal (DVS) und ein digitalisiertes Tonsignal (TDS) enthaltendes Programmsignal (PS) mit einem opto-elektrischem Wandler (19) und einem ATM-Demultiplexer/Deassembler (20) vorgesehen ist,
daß ein Rundstrahl-Empfangsteil (RE) mit einem Tuner (24), einem Demodulator (25) für digitale Signale vorgesehen ist, daß die Ausgänge der Empfangskopfstelle (EK) und des Rundstrahl-Empfangsteils (RE) über einen ersten Umschalter (U1) mit einem Demultiplexer (21) zur Trennung des Videosignals (VDS) vom Tonsignal (TDS) verbunden sind, und
daß über einen Quellen-Decodierer (22) ein Empfänger (23) an den Demultiplexer (21) angeschaltet ist.

14. Empfangseinrichtung nach Anspruch 13,
**dadurch gekennzeichnet**,
daß zwischen dem Quellen-Decodierer (22) und dem Empfänger (23) ein Umschalter (U2) für analoge Videoquellen (PQ) eingeschaltet ist.

15. Empfangseinrichtung nach Anspruch 13 oder 14,
**dadurch gekennzeichnet**,
daß der Empfangsteil (23) Einrichtungen zur Verarbeitung von Signalen (IAS) interaktiver Dienste aufweist.

16. Empfangseinrichtung nach einem der Ansprüche 13 bis 15,
**dadurch gekennzeichnet**,
daß ein Bedienteil (29) zur Steuerung der Programmauswahl und der interaktiven Dienste vorgesehen ist.
